# EUROPEAN PATENT SPECIFICATION

(11) **EP 4 414 956 B1**
(45) Date of publication and mention of the grant of the patent: **07.10.2026**
(21) Application number: 24155543.2
(22) Date of filing: 02.02.2024
(51) Int. Cl.: G08B 13/24, E05B 73/00

(54) **SECURITY TAG HOUSING**
SICHERHEITSETIKETTENGEHÄUSE
BOÎTIER D'ÉTIQUETTE DE SÉCURITÉ

(30) Priority: 13.02.2023 US 202363484673 P; 17.01.2024 US 202418415265
(43) Date of publication of application: 14.08.2024
(73) Proprietor: Fasteners for Retail, Inc., Twinsburg, OH 44087 (US)
(72) Inventor: Garduno, Gabriel, Minneapolis, 55407 (US); Comstock, Jeffrey Allen, Edgerton, 53534 (US); Eden, Keith C., Loves Park, 61111 (US); Nagel, Thomas O., Rockford, 61107 (US)
(74) Representative: Hoeger, Stellrecht & Partner Patentanwälte mbB

(56) References cited:
- JP-A- 2019 128 636
- US-A1- 2015 298 885
- US-A1- 2021 355 715

## Description

### FIELD OF THE INVENTION

This invention generally relates to retail systems, and, more particularly, to a housing for a security tag as theft detection devices for use in a retail environment.

### BACKGROUND OF THE INVENTION

Loss prevention in the retail merchandise industries remains a paramount concern. Various loss prevention technologies have been implemented to deter both single and multi-product theft. For non-limiting example, some devices such as Electronic Article Surveillance (EAS) tag systems may be attached to product packaging and then sound an alarm upon a potential theft event, such as crossing through a gate at the retail establishment, the removal of a large amount of product from a display at once, blocking light to the EAS tag, movement of the EAS tag, removal from the package, etc.

These EAS tags also include some type of internal signal emitter, or signal interrupter, (collectively referred to herein as a "signal emitter") which generates (or interrupts) a signal continuously or selectively after excitation by an external device. Such signal emitters may be for non-limiting example electro-magnetic, acousto-magnetic, or radio-frequency based. The signal generated by the internal signal emitter is typically detected by a gate or other device at the entry/exit point of the retail establishment. If an active EAS tag passes through this gate or other device, an alarm or other notification is generated.

The EAS tags are disclosed in JP 2019128636 A and in US 2021/355715 A1.

Examples of the present disclosure provide improvements over the current state of the art for EAS tags.

### BRIEF SUMMARY OF THE INVENTION

The invention according to claim 1 provides a new and improved housing for a security tag. The new and improved housing provides improved attachment of an attachment band or cable to the housing of the security tag.

The housing includes undercut regions through which the band or cable can pass when attaching the band or cable to the housing of the security tag.

According to the invention as defined in claim1, a housing for a security tag is provided. The housing includes a top wall, an annular side wall, a shoulder region and first and second notches. The top wall has a top wall outer surface and an opposed top wall inner surface. The annular sidewall wall extends outward from the top wall forming an intersection therebetween. The annular sidewall has a sidewall outer surface and a sidewall inner surface. The shoulder region is formed proximate the intersection of the top wall and the annular wall. The first notch is formed in a first portion of the shoulder region. The first notch has first and second projections extending towards one another. Distal ends of the first and second projections are spaced apart a first distance forming a first gap therebetween. The first projection forms a first undercut region of the first notch. The second projection forms a second undercut region of the first notch. The second notch is formed in a second portion of the shoulder region. The second portion of the shoulder region is on an opposed side of top wall as the first portion of the shoulder region. The second notch has third and fourth projections extending towards one another. Distal ends of the third and fourth projections are spaced apart a second distance forming a second gap therebetween. The third projection forms a third undercut region of the second notch. The fourth projection forms a fourth undercut region of the second notch.

In one example, the annular sidewall includes first, second, third and fourth sidewall portions. The first and second sidewall portions are spaced apart and opposed from one another. The third and fourth sidewall portions are spaced apart and opposed from one another. The third and fourth sidewall portions extend between the first and second sidewall portions. The first portion of the shoulder region is provided between the first sidewall portion and the top wall. The second portion of the shoulder region is provided between the second sidewall portion and the top wall.

According to the invention according to claim 1, the first notch has a first bottom surface that faces outward. The first and second projections are spaced outward from the first bottom surface. The first undercut region is formed between the first projection and the first bottom surface. The second undercut region is formed between the second projection and the first bottom surface. The first bottom surface extends at a non-parallel, non-perpendicular angle to the outer surface of the top wall and at a non-parallel, non-perpendicular angle to the outer surface of the annular sidewall. The second notch has a second bottom surface that faces outward. The third and fourth projections are spaced outward from the second bottom surface. The third undercut region is formed between the third projection and the second bottom surface. The fourth undercut region is formed between the fourth projection and the second bottom surface. The second bottom surface extends at a non-parallel, non-perpendicular angle to the outer surface of the top wall and at a non-parallel, non-perpendicular angle to the outer surface of the annular sidewall.

In one example, the non-parallel, non-perpendicular angle between the first bottom surface and the outer surface of the top wall is greater than 90 degrees. The non-parallel, non-perpendicular angle between the first bottom surface and the outer surface of the annular sidewall is greater than 90 degrees. The non-parallel, non-perpendicular angle between the second bottom surface and the outer surface of the top wall is greater than 90 degrees. The non-parallel, non-perpendicular angle between the second bottom surface and the outer surface of the annular sidewall is greater than 90 degrees.

In one example, the first projection has an inward direct first face. The inward directed first face and the first bottom wall are separated by the first undercut region. The inward directed first face and the first bottom wall are planar surfaces. The second projection has an inward direct second face. The inward directed second face and the first bottom wall are separated by the second undercut region. The inward directed second face is a planar surface. The third projection has an inward direct third face. The inward directed third face and the second bottom wall separated by the third undercut region. The inward directed third face and the second bottom wall are planar surfaces. The fourth projection has an inward direct fourth face. The inward directed fourth face and the second bottom wall are separated by the fourth undercut region. The inward directed fourth face is a planar surface.

In one example, at least a portion of the shoulder region projects outward beyond the annular sidewall.

In one example, a first portion of the shoulder region adjacent the first sidewall portion projects, at least in part, outward beyond the first sidewall portion. A second portion of the shoulder region adjacent the second sidewall portion projects, at least in part, outward beyond the second sidewall portion. A third portion of the shoulder region adjacent the third sidewall portion projects, at least in part, outward beyond the third sidewall portion. A fourth portion of the shoulder region adjacent the fourth sidewall portion projects, at least in part, outward beyond the fourth sidewall portion.

In one example, a first edge of the first bottom surface that is proximate the outer surface of the annular sidewall portion and spaced away from the outer surface of the top wall is positioned laterally outward from the outer surface of the annular sidewall portion. A second edge of the second bottom surface that is proximate the outer surface of the annular sidewall portion and spaced away from the outer surface of the top wall is positioned laterally outward from the outer surface of the annular sidewall portion.

In one example, the inner surface of the top wall and the inner surface of the annular sidewall defines an internal cavity.

In one example, the first gap is centered between the third and fourth sidewall portions and the second gap is centered between the third and fourth sidewall portions.

In one example, the first and second sidewall portions are generally parallel to one another. The third and fourth sidewall portions are generally parallel to one another. The third and fourth sidewall portions are generally perpendicular to the first and second sidewall portions.

In one example, the first notch is formed between first and second support walls that are spaced apart a third distance. The third distance is greater than the first distance. The first projection extends from the first support wall towards the second support wall. The second projection extends from the second support wall towards the first support wall. The second notch is formed between third and fourth support walls that are spaced apart a fourth distance. The fourth distance is greater than the second distance. The third projection extends from the third support wall towards the fourth support wall. The fourth projection extends from the fourth support wall towards the third support wall.

In one example, the inward directed first and second faces are substantially parallel to the outward directed first bottom wall. The inward directed third and fourth faces are substantially parallel to the outward directed second bottom wall.

In one example, a third notch is formed in a third portion of the shoulder region. The third notch has fifth and sixth projections extending towards one another. Distal ends of the fifth and sixth projections are spaced apart a fifth distance forming a third gap therebetween. The fifth projection forms a fifth undercut region of the third notch. The sixth projection forms a sixth undercut region of the third notch. A fourth notch is formed in a fourth portion of the shoulder region. The fourth portion of the shoulder region is on an opposed side of top wall as the third portion of the shoulder region. The fourth notch has seventh and eighth projections extending towards one another. Distal ends of the seventh and eighth projections are spaced apart a sixth distance forming a fourth gap therebetween. The seventh projection forms a seventh undercut region of the fourth notch. The eighth projection forms an eighth undercut region of the fourth notch.

In one example, the gaps of the first and second notches form a first axis. The gaps of the third and fourth notches form a second axis that is perpendicular to the first axis.

In one example, an assembly is provided that includes a housing as outlined above. Also, the assembly includes a band that forms a continuous loop when attached to the housing. The band has a first portion extending within the first notch and a second portion extending within the second notch.

In an example, the assembly includes a retail merchandise package having an outer periphery. The band extends around the outer periphery and secures the housing to the retail merchandise package.

In one example, the band has a width and a thickness. The width is parallel to the first and second bottom surfaces and the thickness is measured perpendicular to the first and second bottom surfaces. The width is greater than the thickness.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a front view of a security tag secured to a product;
FIG. 2 is a cross-sectional illustration of FIG. 1;
FIG. 3 is a perspective illustration of the security tag removed from the product;
FIG. 4 is a rear view illustration of the housing of the security tag of FIG. 3; and
FIG. 5 is an enlarge cross-sectional illustration of the security tag of FIG. 3.

The invention will be described in connection with certain preferred embodiments, there is no intent to limit it to those embodiments. On the contrary, the intent is to cover all alternatives, modifications as defined by the appended claims.

### DETAILED DESCRIPTION OF THE INVENTION

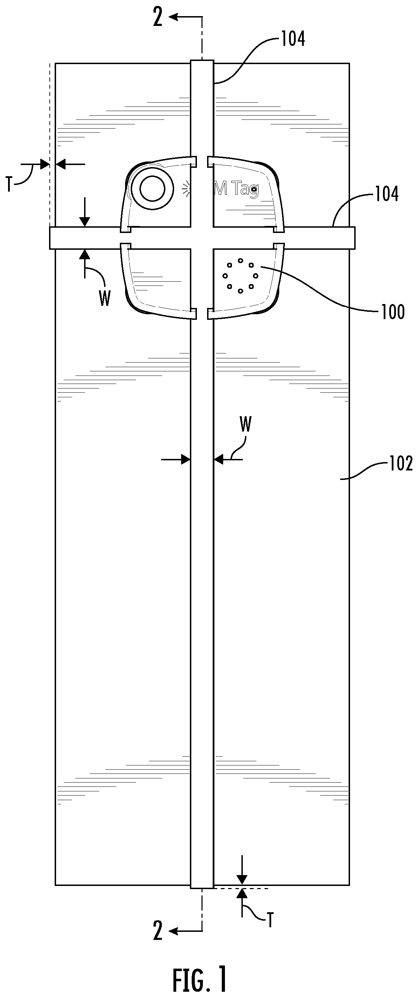

FIG. 1 illustrates a security tag 100 attached to a retail merchandise package 102 by bands 104. The security tag 100 can include internal components for assisting detecting potential theft of the retail merchandise package 102.

In this example, a pair of bands 104 are provided, one oriented vertically and another oriented horizontally. In other examples, the pair of bands 104 could be provided by a single band that is wrapped around the retail merchandise package 102 to provide both the vertical and horizontal components. In other examples, a single band that is only oriented horizontally or vertically may be provided.

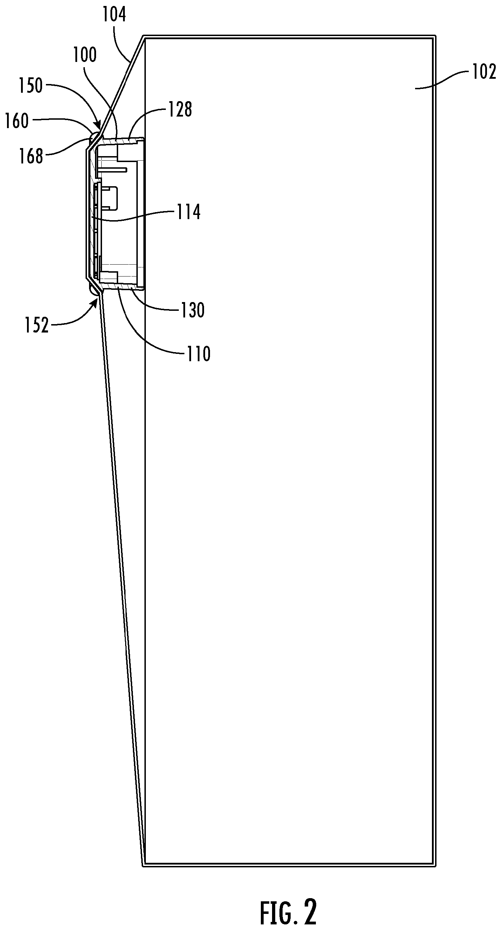

FIG. 2 is a cross-sectional illustration taken about line 2-2 in FIG. 1.

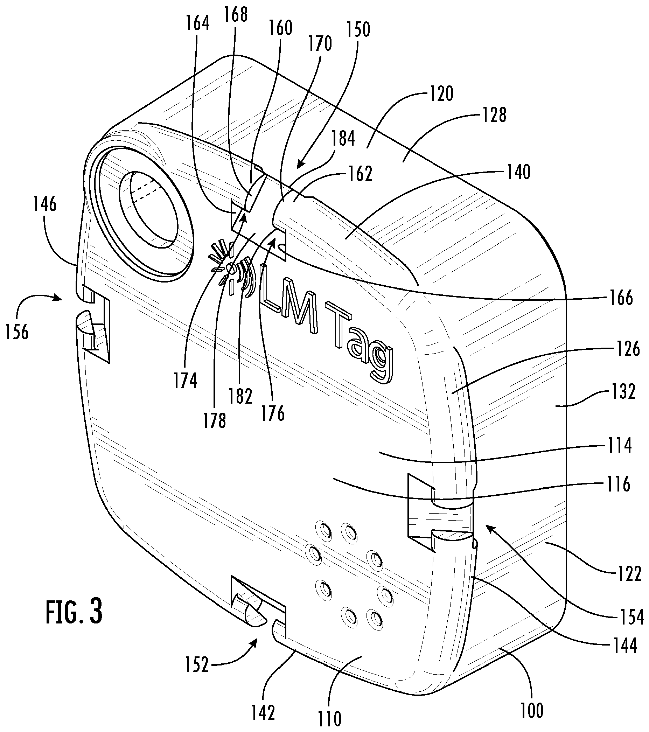

With reference to FIGS. 3-The security tag 100 includes an outer housing 110 that defines an internal cavity 112 that houses various electronic components depending on the application. For example, sensors including light sensors, wire break sensors, motion sensors, RFID sensors may be included. Communication components such as transponders and receivers for communicating status information and or theft event information may be provided. Lights, speakers, vibrators and other indicators may be provided.

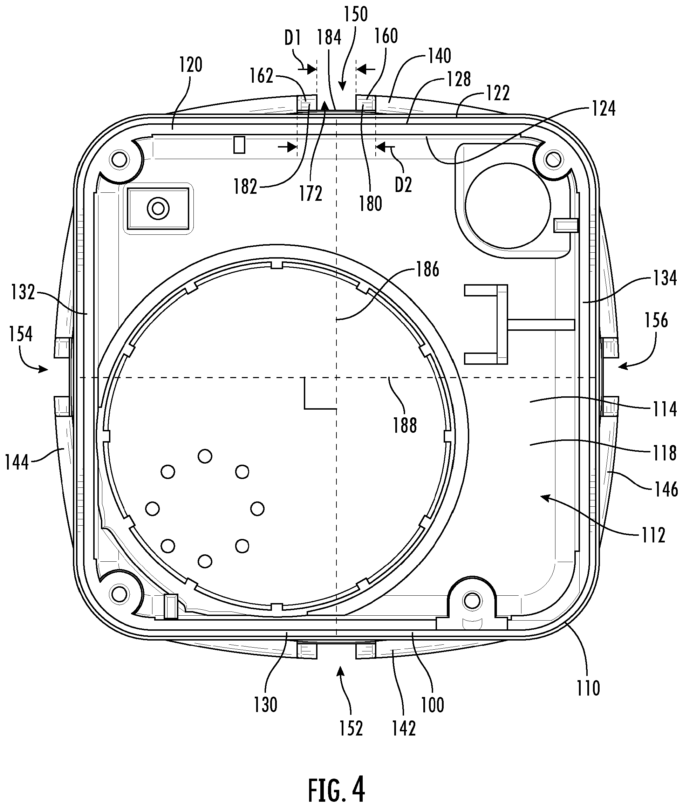

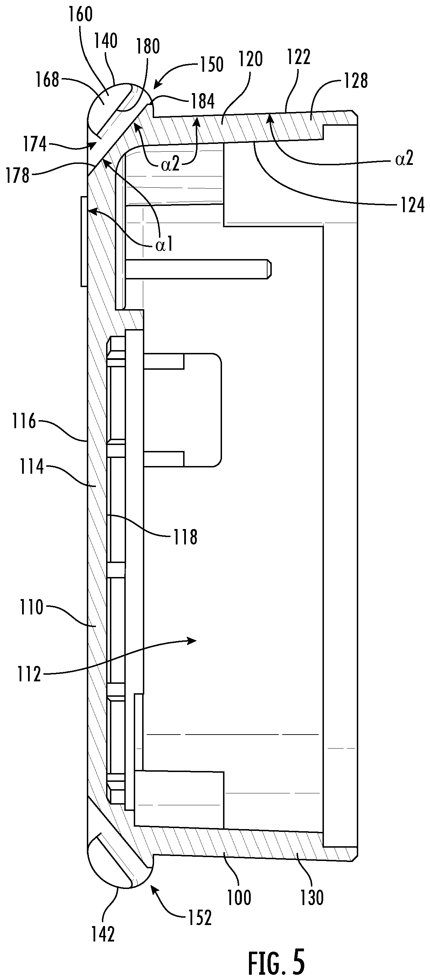

With reference to FIGS. 3-5, the housing 110 will be described in more detail. The housing 110 is designed to provide for easy attachment of the security tag 100 to the retail merchandise package 102 and particularly for receiving portions of the one or more bands 104 that secure the security tag 100 to the package 102.

The housing 110 includes a top wall 114 that has an outer surface 116 and an opposed inner surface 118. The outer surface 116 forms part of the outer periphery of the housing 110 and the inner surface 114 bounds, in part, the internal cavity 112.

An annular sidewall wall 120 extends outward from the top wall 114 forming an intersection therebetween. The annular sidewall has a sidewall outer surface 122 and a sidewall inner surface 124. The sidewall outer surface 122 forms part of the outer periphery of the housing 110 and the sidewall inner surface 124 bounds, in part, the internal cavity 112. The annular sidewall 120 cooperates with the top wall 114 to further define internal cavity 112.

In the illustrated embodiment, the annular sidewall 120 provides a generally rectangular peripheral shape and has first, second, third, and fourth sidewall portions 128, 130, 132, 134, 136. The first and second sidewall portions 128, 130 are generally parallel to one another and spaced part from one another. The third and fourth sidewall portions 132, 134 are parallel to one another and spaced apart from one another. The third and fourth sidewall portions 132, 134 are generally perpendicular to and extend between the first and second sidewall portions 128, 130.

A shoulder region 126 is formed proximate the intersection of the top wall 114 and the annular sidewall 120. First, second, third and fourth shoulder region portions 140, 142, 144, 146 extend laterally outward beyond corresponding ones of the first, second, third, and fourth sidewall portions 128, 130, 132, 134.

In this example, first, second, third and fourth notches 150, 152, 154, 156 are formed in the first, second, third and fourth should region portions 140, 142, 144, 146. The notches 150, 152, 154, 156 receive and secure bands 104. The notches 150, 152, 154, 156 are generally the same so only a single notch will be described.

First notch 150 includes first and second projections 160, 162 that extend from first and second support walls 164, 166 in a cantilevered configuration towards one another. Distal ends 168, 170 of the first and second projections 160, 162 are spaced apart a first distance D1 forming a first gap 172 therebetween. The gap 172 allows the band 104 to be easily inserted into first notch 150 without having to thread an end of the band 104 through the notch. Instead, the user can simply pass any portion of the band 104 through gap 172.

The first notch 150 is formed between the first and second support walls 164, 166. The first and second support walls 164, 166 are spaced from one another a second distance D2 that is greater than distance D1.

In this example, first gap 172 is centered along first sidewall portion 128 and consequently between the third and fourth sidewall portions 132, 134

The first projection 160 forms a first undercut region 174 of the first notch 150. The second projection 162 forms a second undercut region 176 of the first notch 150. The first notch 150 includes a bottom surface 178 that faces outward. The first and second projections 160, 162 are spaced outward from the first bottom surface 178 such that the first and second undercut regions 174, 176 are formed therebetween.

The first bottom surface 178 extends at a non-parallel, non-perpendicular angle α1 to the outer surface 116 of the top wall 114 and at a non-parallel, non-perpendicular angle α2 to the outer surface 122 of the annular sidewall 120 and particular first sidewall portion 128. In particular, angles α1 and α2 are greater than 90 degrees.

The first projection 160 has an inward direct first face 180 that is separated from the first bottom surface 178 by the first undercut region 174. The inward directed first face 180 and the first bottom surface 178 are generally planar surfaces that are, in some examples, generally parallel (e.g. plus or minus 10 degrees from one another). The second projection 162 has a similar inward directed second face 182. The first and second inward directed faces 180, 182 may be generally co-planar.

A first edge 184 of the first bottom surface 178 that is proximate the outer surface 122 of the first sidewall portion 128 is positioned laterally outward from the outer surface 122 of the first sidewall portion 128.

The opposed notches 150, 152 and 154, 156 are aligned and define first axis 186, 188, respectively. In this example, these axes 186, 188 are generally perpendicular to one another.

In an assembled state, the bands 104 form continuous loops that extend around packaging 102. A portion of the bands 104 extends into corresponding notches 150, 152, 154, 156 and into the corresponding undercut regions provided thereby.

In this example, the bands 104 have a width W that is greater than a thickness T. Further, width W is preferably greater than distance D1 so that the band extends into the undercut regions of the associated notches.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law, as long as within the scope of the following claims. Moreover, any combination of the above-described elements in all possible variations thereof is encompassed by the invention unless otherwise indicated herein or otherwise clearly contradicted by context, as long as within the scope of the following claims.

## Claims

1. A housing (110) for a security tag comprising:
a top wall (114) having a top wall outer surface (116) and an opposed top wall inner surface (118);
an annular sidewall wall (120) extending outward from the top wall forming an intersection therebetween, the annular sidewall having a sidewall outer surface (122) and a sidewall inner surface (124);
a shoulder region (126) formed proximate the intersection of the top wall (114) and the annular wall (120);
a first notch (150) formed in a first portion (140) of the shoulder region (126), the first notch (150) having first and second projections (160, 162) extending towards one another, distal ends (168, 170) of the first and second projections being spaced apart a first distance forming a first gap (172) therebetween, the first projection forming a first undercut region (174) of the first notch (150), the second projection forming a second undercut region (176) of the first notch (150); and
a second notch (152) formed in a second portion (142) of the shoulder region (126), the second portion (142) of the shoulder region being on an opposed side of top wall as the first portion of the shoulder region, the second notch having third and fourth projections extending towards one another, distal ends of the third and fourth projections being spaced apart a second distance forming a second gap therebetween, the third projection forming a third undercut region of the second notch, the fourth projection forming a fourth undercut region of the second notch (152), **characterized in that**
the first notch (150) has a first bottom surface (178) that faces outward, the first and second projections (128, 130) being spaced outward from the first bottom surface, the first undercut region (174) being formed between the first projection (128) and the first bottom surface (178), the second undercut region being formed between the second projection (130) and the first bottom surface(178), the first bottom surface (178) extending at a non-parallel, non-perpendicular angle to the outer surface (116) of the top wall (114) and at a non-parallel, non-perpendicular angle to the outer surface (122) of the annular sidewall (120); and
the second notch (152) has a second bottom surface that faces outward, the third and fourth projections being spaced outward from the second bottom surface, the third undercut region being formed between the third projection and the second bottom surface, the fourth undercut region being formed between the fourth projection and the second bottom surface, the second bottom surface extending at a non-parallel, non-perpendicular angle to the outer surface of the top wall and at a non-parallel, non-perpendicular angle to the outer surface of the annular sidewall.

2. The housing of claim 1, wherein the annular sidewall includes first, second, third and fourth sidewall portions (128, 130, 132, 134), the first and second sidewall portions (128, 130) being spaced apart and opposed from one another, the third and fourth sidewall portions being spaced apart and opposed from one another, the third and fourth sidewall portions extending between the first and second sidewall portions (128, 130), the first portion of the shoulder region being provided between the first sidewall portion and the top wall, the second portion of the shoulder region being provided between the second sidewall portion and the top wall.

3. The housing of claim 1 or 2, wherein:
the non-parallel, non-perpendicular angle between the first bottom surface (178) and the outer surface (116) of the top wall (114) is greater than 90 degrees;
the non-parallel, non-perpendicular angle between the first bottom surface (178) and the outer surface (122) of the annular sidewall (120) is greater than 90 degrees;
the non-parallel, non-perpendicular angle between the second bottom surface and the outer surface of the top wall is greater than 90 degrees; and
the non-parallel, non-perpendicular angle between the second bottom surface and the outer surface of the annular sidewall is greater than 90 degrees.

4. The housing of anyone of claims 1 to 3, wherein:
the first projection (160) has an inward direct first face (180), the inward directed first face and the first bottom surface (178) separated by the first undercut region, the inward directed first face and the first bottom surface (178) being planar surfaces;
the second projection (162) has an inward direct second face (182), the inward directed second face and the first bottom surface separated by the second undercut region, the inward directed second face being a planar surface;
the third projection has an inward direct third face, the inward directed third face and the second bottom wall separated by the third undercut region, the inward directed third face and the second bottom wall being planar surfaces;
the fourth projection has an inward direct fourth face, the inward directed fourth face and the second bottom wall separated by the fourth undercut region, the inward directed fourth face being a planar surface.

5. The housing of anyone of claims 1 to 4, wherein at least a portion of the shoulder region projects outward beyond the annular sidewall.

6. The housing of anyone of claims 2 to 5, wherein:
a first portion of the shoulder region adjacent the first sidewall portion projects, at least in part, outward beyond the first sidewall portion;
a second portion of the shoulder region adjacent the second sidewall portion projects, at least in part, outward beyond the second sidewall portion;
a third portion of the shoulder region adjacent the third sidewall portion projects, at least in part, outward beyond the third sidewall portion; and
a fourth portion of the shoulder region adjacent the fourth sidewall portion projects, at least in part, outward beyond the fourth sidewall portion.

7. The housing of anyone of claims 1 to 6, wherein:
a first edge (184) of the first bottom surface (178) that is proximate the outer surface (122) of the annular sidewall portion (128) and spaced away from the outer surface of the top wall (114) is positioned laterally outward from the outer surface (122) of the annular sidewall portion (128); and
a second edge of the second bottom surface that is proximate the outer surface of the annular sidewall portion and spaced away from the outer surface of the top wall is positioned laterally outward from the outer surface of the annular sidewall portion.

8. The housing of any preceding claim, wherein the inner surface of the top wall and the inner surface of the annular sidewall defines an internal cavity (112).

9. The housing of claim 2, wherein the first gap (172) is centered between the third and fourth sidewall portions (132, 134) and the second gap is centered between the third and fourth sidewall portions (132, 134).

10. The housing of claim 2, wherein:
the first and second sidewall portions (128, 130) are generally parallel to one another;
the third and fourth sidewall portions (132, 134) are generally parallel to one another; and
the third and fourth sidewall portions (132, 134) are generally perpendicular to the first and second sidewall portions (128, 130).

11. The housing of any preceding claim, wherein:
the first notch (150) is formed between first and second support walls (164, 160) that are spaced apart a third distance, the third distance being greater than the first distance;
the first projection (160) extends from the first support wall (164) towards the second support wall (166);
the second projection (162) extends from the second support wall (166) towards the first support wall (164);
the second notch is formed between third and fourth support walls that are spaced apart a fourth distance, the fourth distance being greater than the second distance;
the third projection extends from the third support wall towards the fourth support wall; and
the fourth projection extends from the fourth support wall towards the third support wall.

12. The housing of claim 4, wherein:
the inward directed first and second faces are substantially parallel to the outward directed first bottom surface (178); and
the inward directed third and fourth faces are substantially parallel to the outward directed second bottom wall.

13. The housing of any preceding claim further comprising:
a third notch formed in a third portion of the shoulder region, the third notch having fifth and sixth projections extending towards one another, distal ends of the fifth and sixth projections being spaced apart a fifth distance forming a third gap therebetween, the fifth projection forming a fifth undercut region of the third notch, the sixth projection forming a sixth undercut region of the third notch; and
a fourth notch formed in a fourth portion of the shoulder region, the fourth portion of the shoulder region being on an opposed side of top wall as the third portion of the shoulder region, the fourth notch having seventh and eighth projections extending towards one another, distal ends of the seventh and eighth projections being spaced apart a sixth distance forming a fourth gap therebetween, the seventh projection forming a seventh undercut region of the fourth notch, the eighth projection forming an eighth undercut region of the fourth notch.

14. The housing of claim 13, wherein:
the gaps of the first and second notches form a first axis; and
the gaps of the third and fourth notches form a second axis that is perpendicular to the first axis.

15. An assembly comprising:
a housing (110) of any preceding claim;
a band (104) that forms a continuous loop when attached to the housing, the band having a first portion extending within the first notch (150) and a second portion extending within the second notch.

16. The assembly of claim 15 comprising:
a retail merchandise package having an outer periphery;
the band (104) extending around the outer periphery and securing the housing (110) to the retail merchandise package (102).

17. The assembly of either claim 15 or claim 16, wherein:
the band has a width and a thickness;
the width is parallel to the first and second bottom surfaces and the thickness is measured perpendicular to the first and second bottom surfaces; and
the width being greater than the thickness.

## Patentansprüche

1. Gehäuse (110) für ein Sicherungsetikett mit:
einer oberen Wand (114) mit einer Außenfläche (116) der oberen Wand und einer gegenüberliegenden Innenfläche (118) der oberen Wand;
einer Wand einer ringförmigen Seitenwand (120), die sich von der oberen Wand nach außen erstreckt und zwischen diesen eine Schnittstelle bildet, wobei die ringförmige Seitenwand eine Seitenwand-Außenfläche (122) und eine Seitenwand-Innenfläche (124) aufweist;
einem Schulterbereich (126), der in der Nähe der Schnittstelle der oberen Wand (114) und der ringförmigen Wand (120) ausgebildet ist;
einer ersten Aussparung (150), die in einem ersten Abschnitt (140) des Schulterbereichs (126) ausgebildet ist, wobei die erste Aussparung (150) erste und zweite Vorsprünge (160, 162) aufweist, die sich aufeinander zu erstrecken, wobei distale Enden (168, 170) der ersten und zweiten Vorsprünge eine erste Distanz voneinander beabstandet sind, wodurch ein erster Spalt (172) zwischen ihnen gebildet wird, wobei der erste Vorsprung einen ersten hinterschnittenen Bereich (174) der ersten Aussparung (150) bildet, wobei der zweite Vorsprung einen zweiten hinterschnittenen Bereich (176) der ersten Aussparung (150) bildet; und
einer zweiten Aussparung (152), die in einem zweiten Abschnitt (142) des Schulterbereichs (126) ausgebildet ist, wobei sich der zweite Abschnitt (142) des Schulterbereichs auf einer gegenüberliegenden Seite der oberen Wand im Vergleich zu dem ersten Abschnitt des Schulterbereichs befindet, wobei die zweite Aussparung dritte und vierte Vorsprünge aufweist, die sich aufeinander zu erstrecken, wobei distale Enden der dritten und vierten Vorsprünge eine zweite Distanz voneinander beabstandet sind, wodurch ein zweiter Spalt zwischen ihnen gebildet wird, wobei der dritte Vorsprung einen dritten hinterschnittenen Bereich der zweiten Aussparung bildet, wobei der vierte Vorsprung einen vierten hinterschnittenen Bereich der zweiten Aussparung (152) bildet, **dadurch gekennzeichnet, dass** die erste Aussparung (150) eine erste Bodenfläche (178) aufweist, die nach außen weist, wobei die ersten und zweiten Vorsprünge (128, 130) von der ersten Bodenfläche nach außen beabstandet sind, wobei der erste hinterschnittene Bereich (174) zwischen dem ersten Vorsprung (128) und der ersten Bodenfläche (178) ausgebildet ist, wobei der zweite hinterschnittene Bereich zwischen dem zweiten Vorsprung (130) und der ersten Bodenfläche (178) ausgebildet ist, wobei sich die erste Bodenfläche (178) in einem nicht parallelen, nicht lotrechten Winkel zu der Außenfläche (116) der oberen Wand (114) und in einem nicht parallelen, nicht lotrechten Winkel zu der Außenfläche (122) der ringförmigen Seitenwand (120) erstreckt; und
wobei die zweite Aussparung (152) eine zweite Bodenfläche aufweist, die nach außen weist, wobei die dritten und vierten Vorsprünge von der zweiten Bodenfläche nach außen beabstandet sind, wobei der dritte hinterschnittene Bereich zwischen dem dritten Vorsprung und der zweiten Bodenfläche ausgebildet ist, wobei der vierte hinterschnittene Bereich zwischen dem vierten Vorsprung und der zweiten Bodenfläche ausgebildet ist, wobei sich die zweite Bodenfläche in einem nicht parallelen, nicht lotrechten Winkel zu der Außenfläche der oberen Wand und in einem nicht parallelen, nicht lotrechten Winkel zu der Außenfläche der ringförmigen Seitenwand erstreckt.

2. Gehäuse nach Anspruch 1, bei dem die ringförmige Seitenwand erste, zweite, dritte und vierte Seitenwandabschnitte (128, 130, 132, 134) aufweist, wobei die ersten und zweiten Seitenwandabschnitte (128, 130) voneinander beabstandet sind und einander gegenüberliegen, wobei die dritten und vierten Seitenwandabschnitte voneinander beabstandet sind und einander gegenüberliegen, wobei sich die dritten und vierten Seitenwandabschnitte zwischen den ersten und zweiten Seitenwandabschnitten (128, 130) erstrecken, wobei der erste Abschnitt des Schulterbereichs zwischen dem ersten Seitenwandabschnitt und der oberen Wand bereitgestellt wird, wobei der zweite Abschnitt des Schulterbereichs zwischen dem zweiten Seitenwandabschnitt und der oberen Wand bereitgestellt wird.

3. Gehäuse nach Anspruch 1 oder 2, bei dem:
der nicht parallele, nicht lotrechte Winkel zwischen der ersten Bodenfläche (178) und der Außenfläche (116) der oberen Wand (114) grösser als 90 Grad ist;
der nicht parallele, nicht lotrechte Winkel zwischen der ersten Bodenfläche (178) und der Außenfläche (122) der ringförmigen Seitenwand (120) grösser als 90 Grad ist;
der nicht parallele, nicht lotrechte Winkel zwischen der zweiten Bodenfläche und der Außenfläche der oberen Wand grösser als 90 Grad ist; und
der nicht parallele, nicht lotrechte Winkel zwischen der zweiten Bodenfläche und der Außenfläche der ringförmigen Seitenwand grösser als 90 Grad ist.

4. Gehäuse nach einem beliebigen der Ansprüche 1 bis 3, bei dem:
der erste Vorsprung (160) eine nach innen gerichtete erste Fläche (180) aufweist, wobei die nach innen gerichtete erste Fläche und die erste Bodenfläche (178) durch den ersten hinterschnittenen Bereich getrennt sind, wobei die nach innen gerichtete erste Fläche und die erste Bodenfläche (178) ebene Flächen sind;
der zweite Vorsprung (162) eine nach innen gerichtete zweite Fläche (182) aufweist, wobei die nach innen gerichtete zweite Fläche und die erste Bodenfläche durch den zweiten hinterschnittenen Bereich getrennt sind, wobei die nach innen gerichtete zweite Fläche eine ebene Fläche ist;
der dritte Vorsprung eine nach innen gerichtete dritte Fläche aufweist, wobei die nach innen gerichtete dritte Fläche und die zweite Bodenwand durch den dritten hinterschnittenen Bereich getrennt sind, wobei die nach innen gerichtete dritte Fläche und die zweite Bodenwand ebene Flächen sind;
der vierte Vorsprung eine nach innen gerichtete vierte Fläche aufweist, wobei die nach innen gerichtete vierte Fläche und die zweite Bodenwand durch den vierten hinterschnittenen Bereich getrennt sind, wobei die nach innen gerichtete vierte Fläche eine ebene Fläche ist.

5. Gehäuse nach einem beliebigen der Ansprüche 1 bis 4, bei dem wenigstens ein Abschnitt des Schulterbereichs über die ringförmige Seitenwand nach außen vorsteht.

6. Gehäuse nach einem beliebigen der Ansprüche 2 bis 5, bei dem:
ein erster Abschnitt des Schulterbereichs, benachbart zu dem ersten Seitenwandabschnitt, wenigstens teilweise nach außen über den ersten Seitenwandabschnitt hinausragt;
ein zweiter Abschnitt des Schulterbereichs, benachbart zu dem zweiten Seitenwandabschnitt, wenigstens teilweise nach außen über den zweiten Seitenwandabschnitt hinausragt;
ein dritter Abschnitt des Schulterbereichs, benachbart zu dem dritten Seitenwandabschnitt, wenigstens teilweise nach außen über den dritten Seitenwandabschnitt hinausragt; und
ein vierter Abschnitt des Schulterbereichs, benachbart zu dem vierten Seitenwandabschnitt, wenigstens teilweise nach außen über den vierten Seitenwandabschnitt hinausragt.

7. Gehäuse nach einem beliebigen der Ansprüche 1 bis 6, bei dem:
eine erste Kante (184) der ersten Bodenfläche (178), die sich in der Nähe der Außenfläche (122) des ringförmigen Seitenwandabschnitts (128) befindet und von der Außenfläche der oberen Wand (114) weg beabstandet ist, seitlich nach außen von der Außenfläche (122) des ringförmigen Seitenwandabschnitts (128) angeordnet ist; und
eine zweite Kante der zweiten Bodenfläche, die sich in der Nähe der Außenfläche des ringförmigen Seitenwandabschnitts befindet und von der Außenfläche der oberen Wand weg beabstandet ist, seitlich nach außen von der Außenfläche des ringförmigen Seitenwandabschnitts angeordnet ist.

8. Gehäuse nach einem beliebigen der vorhergehenden Ansprüche, bei dem die Innenfläche der oberen Wand und die Innenfläche der ringförmigen Seitenwand einen inneren Hohlraum (112) festlegen.

9. Gehäuse nach Anspruch 2, bei dem der erste Spalt (172) zwischen den dritten und vierten Seitenwandabschnitten (132, 134) mittig angeordnet ist, und der zweite Spalt zwischen den dritten und vierten Seitenwandabschnitten (132, 134) mittig angeordnet ist.

10. Gehäuse nach Anspruch 2, bei dem:
die ersten und zweiten Seitenwandabschnitte (128, 130) allgemein parallel zueinander sind;
die dritten und vierten Seitenwandabschnitte (132, 134) allgemein parallel zueinander sind; und
die dritten und vierten Seitenwandabschnitte (132, 134) allgemein lotrecht zu den ersten und zweiten Seitenwandabschnitten (128, 130) sind.

11. Gehäuse nach einem beliebigen der vorhergehenden Ansprüche, bei dem:
die erste Aussparung (150) zwischen ersten und zweiten Stützwänden (164, 160), die eine dritte Distanz voneinander beabstandet sind, wobei die dritte Distanz grösser als die erste Distanz ist, ausgebildet ist;
der erste Vorsprung (160) sich von der ersten Stützwand (164) in Richtung der zweiten Stützwand (166) erstreckt;
der zweite Vorsprung (162) sich von der zweiten Stützwand (166) in Richtung der ersten Stützwand (164) erstreckt;
die zweite Aussparung zwischen dritten und vierten Stützwänden, die eine vierte Distanz voneinander beabstandet sind, wobei die vierte Distanz grösser als die zweite Distanz ist, ausgebildet ist;
der dritte Vorsprung sich von der dritten Stützwand in Richtung der vierten Stützwand erstreckt; und
der vierte Vorsprung sich von der vierten Stützwand in Richtung der dritten Stützwand erstreckt.

12. Gehäuse nach Anspruch 4, bei dem:
die nach innen gerichteten ersten und zweiten Flächen im Wesentlichen parallel zu der nach außen gerichteten ersten Bodenfläche (178) sind; und
die nach innen gerichteten dritten und vierten Flächen sind im Wesentlichen parallel zu der nach außen gerichteten zweiten Bodenwand sind.

13. Gehäuse nach einem beliebigen der vorhergehenden Ansprüche, welches weiterhin aufweist:
eine dritte Aussparung, die in einem dritten Abschnitt des Schulterbereichs ausgebildet ist, wobei die dritte Aussparung fünfte und sechste Vorsprünge aufweist, die sich aufeinander zu erstrecken, wobei distale Enden des fünften und sechsten Vorsprungs eine fünfte Distanz beabstandet sind, wodurch ein dritter Spalt zwischen ihnen gebildet wird, wobei der fünfte Vorsprung einen fünften hinterschnittenen Bereich der dritten Aussparung bildet, wobei der sechste Vorsprung einen sechsten hinterschnittenen Bereich der dritten Aussparung bildet; und
eine vierte Aussparung, die in einem vierten Abschnitt des Schulterbereichs ausgebildet ist, wobei sich der vierte Abschnitt des Schulterbereichs auf einer gegenüberliegenden Seite der oberen Wand im Vergleich zu dem dritten Abschnitt des Schulterbereichs befindet, wobei die vierte Aussparung siebte und achte Vorsprünge aufweist, die sich aufeinander zu erstrecken, wobei distale Enden des siebten und achten Vorsprungs eine sechste Distanz voneinander beabstandet sind, wodurch ein vierter Spalt zwischen ihnen gebildet wird, wobei der siebte Vorsprung einen siebten hinterschnittenen Bereich der vierten Aussparung bildet, wobei der achte Vorsprung einen achten hinterschnittenen Bereich der vierten Aussparung bildet.

14. Gehäuse nach Anspruch 13, bei dem:
die Spalte der ersten und zweiten Aussparungen eine erste Achse bilden; und
die Spalte der dritten und vierten Aussparungen eine zweite Achse bilden, die lotrecht zu der ersten Achse ist.

15. Anordnung mit:
einem Gehäuse (110) nach einem beliebigen der vorhergehenden Ansprüche;
einem Band (104), das eine kontinuierliche Schleife bildet, wenn es an dem Gehäuse angebracht ist, wobei das Band einen ersten Abschnitt, der sich innerhalb der ersten Aussparung (150) erstreckt, und einen zweiten Abschnitt, der sich innerhalb der zweiten Aussparung erstreckt, aufweist.

16. Anordnung nach Anspruch 15 mit:
einer Einzelhandels-Warenpackung, welche einen Außenumfang aufweist;
wobei sich das Band (104) um den Außenumfang erstreckt und das Gehäuse (110) an der Einzelhandelswarenpackung (102) sichert.

17. Anordnung nach entweder Anspruch 15 oder Anspruch 16, bei der:
das Band eine Breite und eine Dicke aufweist;
die Breite parallel zu den ersten und zweiten Bodenflächen ist und die Dicke lotrecht zu den ersten und zweiten Bodenflächen gemessen wird; und
die Breite größer als die Dicke ist.

## Revendications

1. Boîtier (110) pour une étiquette de sécurité comprenant :
une paroi supérieure (114) ayant une surface extérieure de paroi supérieure (116) et une surface intérieure de paroi supérieure opposée (118) ;
une paroi de paroi latérale annulaire (120) s'étendant vers l'extérieur à partir de la paroi supérieure formant une intersection entre celles-ci, la paroi latérale annulaire ayant une surface extérieure de paroi latérale (122) et une surface intérieure de paroi latérale (124) ;
une région d'épaulement (126) formée à proximité de l'intersection de la paroi supérieure (114) et de la paroi annulaire (120) ;
une première encoche (150) formée dans une première partie (140) de la région d'épaulement (126), la première encoche (150) ayant des première et deuxième saillies (160, 162) s'étendant l'une vers l'autre, les extrémités distales (168, 170) des première et deuxième saillies étant espacées d'une première distance formant un premier interstice (172) entre celles-ci, la première saillie formant une première région de contre-dépouille (174) de la première encoche (150), la deuxième saillie formant une deuxième région de contre-dépouille (176) de la première encoche (150) ; et
une deuxième encoche (152) formée dans une deuxième partie (142) de la région d'épaulement (126), la deuxième partie (142) de la région d'épaulement étant sur un côté opposé de la paroi supérieure par rapport à la première partie de la région d'épaulement, la deuxième encoche ayant des troisième et quatrième saillies s'étendant l'une vers l'autre, les extrémités distales des troisième et quatrième saillies étant espacées d'une deuxième distance formant un deuxième interstice entre celles-ci, la troisième saillie formant une troisième région de contre-dépouille de la deuxième encoche, la quatrième saillie formant une quatrième région de contre-dépouille de la deuxième encoche (152), **caractérisé en ce que**
la première encoche (150) a une première surface inférieure (178) qui est orientée vers l'extérieur, les première et deuxième saillies (128, 130) étant espacées vers l'extérieur de la première surface inférieure, la première région de contre-dépouille (174) étant formée entre la première saillie (128) et la première surface inférieure (178), la deuxième région de contre-dépouille étant formée entre la deuxième saillie (130) et la première surface inférieure (178), la première surface inférieure (178) s'étendant à un angle non parallèle, non perpendiculaire avec la surface extérieure (116) de la paroi supérieure (114) et à un angle non parallèle, non perpendiculaire avec la surface extérieure (122) de la paroi latérale annulaire (120) ; et
la deuxième encoche (152) a une seconde surface inférieure qui est orientée vers l'extérieur, les troisième et quatrième saillies étant espacées vers l'extérieur de la seconde surface inférieure, la troisième région de contre-dépouille étant formée entre la troisième saillie et la seconde surface inférieure, la quatrième région de contre-dépouille étant formée entre la quatrième saillie et la seconde surface inférieure, la seconde surface inférieure s'étendant à un angle non parallèle, non perpendiculaire avec la surface extérieure de la paroi supérieure et à un angle non parallèle, non perpendiculaire avec la surface extérieure de la paroi latérale annulaire.

2. Boîtier selon la revendication 1, dans lequel la paroi latérale annulaire comporte des première, deuxième, troisième et quatrième parties de paroi latérale (128, 130, 132, 134), les première et deuxième parties de paroi latérale (128, 130) étant espacées l'une de l'autre et opposées l'une à l'autre, les troisième et quatrième parties de paroi latérale étant espacées l'une de l'autre et opposées l'une à l'autre, les troisième et quatrième parties de paroi latérale s'étendant entre les première et deuxième parties de paroi latérale (128, 130), la première partie de la région d'épaulement étant fournie entre la première partie de paroi latérale et la paroi supérieure, la deuxième partie de la région d'épaulement étant fournie entre la deuxième partie de paroi latérale et la paroi supérieure.

3. Boîtier selon la revendication 1 ou 2, dans lequel :
l'angle non parallèle, non perpendiculaire entre la première surface inférieure (178) et la surface extérieure (116) de la paroi supérieure (114) est supérieur à 90 degrés ;
l'angle non parallèle, non perpendiculaire entre la première surface inférieure (178) et la surface extérieure (122) de la paroi latérale annulaire (120) est supérieur à 90 degrés ;
l'angle non parallèle, non perpendiculaire entre la seconde surface inférieure et la surface extérieure de la paroi supérieure est supérieur à 90 degrés ; et
l'angle non parallèle, non perpendiculaire entre la seconde surface inférieure et la surface extérieure de la paroi latérale annulaire est supérieur à 90 degrés.

4. Boîtier selon l'une quelconque des revendications 1 à 3, dans lequel :
la première saillie (160) a une première face (180) dirigée vers l'intérieur, la première face dirigée vers l'intérieur et la première surface inférieure (178) étant séparées par la première région de contre-dépouille, la première face dirigée vers l'intérieur et la première surface inférieure (178) étant des surfaces planes ;
la deuxième saillie (162) a une deuxième face (182) dirigée vers l'intérieur, la deuxième face dirigée vers l'intérieur et la première surface inférieure étant séparées par la deuxième région de contre-dépouille, la deuxième face dirigée vers l'intérieur étant une surface plane ;
la troisième saillie a une troisième face dirigée vers l'intérieur, la troisième face dirigée vers l'intérieur et la seconde paroi inférieure étant séparées par la troisième région de contre-dépouille, la troisième face dirigée vers l'intérieur et la seconde paroi inférieure étant des surfaces planes ;
la quatrième saillie a une quatrième face dirigée vers l'intérieur, la quatrième face dirigée vers l'intérieur et la seconde paroi inférieure étant séparées par la quatrième région de contre-dépouille, la quatrième face dirigée vers l'intérieur étant une surface plane.

5. Boîtier selon l'une quelconque des revendications 1 à 4, dans lequel au moins une partie de la région d'épaulement fait saillie vers l'extérieur au-delà de la paroi latérale annulaire.

6. Boîtier selon l'une quelconque des revendications 2 à 5, dans lequel :
une première partie de la région d'épaulement adjacente à la première partie de paroi latérale fait saillie, au moins en partie, vers l'extérieur au-delà de la première partie de paroi latérale ;
une deuxième partie de la région d'épaulement adjacente à la deuxième partie de paroi latérale fait saillie, au moins en partie, vers l'extérieur au-delà de la deuxième partie de paroi latérale ;
une troisième partie de la région d'épaulement adjacente à la troisième partie de paroi latérale fait saillie, au moins en partie, vers l'extérieur au-delà de la troisième partie de paroi latérale ; et
une quatrième partie de la région d'épaulement adjacente à la quatrième partie de paroi latérale fait saillie, au moins en partie, vers l'extérieur au-delà de la quatrième partie de paroi latérale.

7. Boîtier selon l'une quelconque des revendications 1 à 6, dans lequel :
un premier bord (184) de la première surface inférieure (178) qui est proche de la surface extérieure (122) de la partie de paroi latérale annulaire (128) et espacé de la surface extérieure de la paroi supérieure (114) est positionné latéralement vers l'extérieur à partir de la surface extérieure (122) de la partie de paroi latérale annulaire (128) ; et
un second bord de la seconde surface inférieure qui est proche de la surface extérieure de la partie de paroi latérale annulaire et espacé de la surface extérieure de la paroi supérieure est positionné latéralement vers l'extérieur à partir de la surface extérieure de la partie de paroi latérale annulaire.

8. Boîtier selon une quelconque revendication précédente, dans lequel la surface intérieure de la paroi supérieure et la surface intérieure de la paroi latérale annulaire définissent une cavité interne (112).

9. Boîtier selon la revendication 2, dans lequel le premier interstice (172) est centré entre les troisième et quatrième parties de paroi latérale (132, 134) et le deuxième interstice est centré entre les troisième et quatrième parties de paroi latérale (132, 134).

10. Boîtier selon la revendication 2, dans lequel :
les première et deuxième parties de paroi latérale (128, 130) sont généralement parallèles l'une à l'autre ;
les troisième et quatrième parties de paroi latérale (132, 134) sont généralement parallèles l'une à l'autre ; et
les troisième et quatrième parties de paroi latérale (132, 134) sont généralement perpendiculaires aux première et deuxième parties de paroi latérale (128, 130).

11. Boîtier selon une quelconque revendication précédente, dans lequel :
la première encoche (150) est formée entre des première et deuxième parois de support (164, 160) qui sont espacées d'une troisième distance, la troisième distance étant supérieure à la première distance ;
la première saillie (160) s'étend à partir de la première paroi de support (164) vers la deuxième paroi de support (166) ;
la deuxième saillie (162) s'étend à partir de la deuxième paroi de support (166) vers la première paroi de support (164) ;
la deuxième encoche est formée entre des troisième et quatrième parois de support qui sont espacées d'une quatrième distance, la quatrième distance étant supérieure à la deuxième distance ;
la troisième saillie s'étend à partir de la troisième paroi de support vers la quatrième paroi de support ; et
la quatrième saillie s'étend à partir de la quatrième paroi de support vers la troisième paroi de support.

12. Boîtier selon la revendication 4, dans lequel :
les première et deuxième faces dirigées vers l'intérieur sont sensiblement parallèles à la première surface inférieure (178) dirigée vers l'extérieur ; et
les troisième et quatrième faces dirigées vers l'intérieur sont sensiblement parallèles à la seconde paroi inférieure dirigée vers l'extérieur.

13. Boîtier selon une quelconque revendication précédente, comprenant en outre :
une troisième encoche formée dans une troisième partie de la région d'épaulement, la troisième encoche ayant des cinquième et sixième saillies s'étendant l'une vers l'autre, les extrémités distales des cinquième et sixième saillies étant espacées d'une cinquième distance formant un troisième interstice entre celles-ci, la cinquième saillie formant une cinquième région de contre-dépouille de la troisième encoche, la sixième saillie formant une sixième région de contre-dépouille de la troisième encoche ; et
une quatrième encoche formée dans une quatrième partie de la région d'épaulement, la quatrième partie de la région d'épaulement étant sur un côté opposé de la paroi supérieure par rapport à la troisième partie de la région d'épaulement, la quatrième encoche ayant des septième et huitième saillies s'étendant l'une vers l'autre, les extrémités distales des septième et huitième saillies étant espacées d'une sixième distance formant un quatrième interstice entre celles-ci, la septième saillie formant une septième région de contre-dépouille de la quatrième encoche, la huitième saillie formant une huitième région de contre-dépouille de la quatrième encoche.

14. Boîtier selon la revendication 13, dans lequel :
les interstices des première et deuxième encoches forment un premier axe ; et
les interstices des troisième et quatrième encoches forment un second axe qui est perpendiculaire au premier axe.

15. Ensemble comprenant :
un boîtier (110) selon une quelconque revendication précédente ;
une bande (104) qui forme une boucle continue lorsqu'elle est fixée au boîtier, la bande ayant une première partie s'étendant dans la première encoche (150) et une seconde partie s'étendant dans la deuxième encoche.

16. Ensemble selon la revendication 15, comprenant :
un emballage de marchandise vendue au détail ayant une périphérie extérieure ;
la bande (104) s'étendant autour de la périphérie extérieure et assujettissant le boîtier (110) à l'emballage (102) de marchandise vendue au détail.

17. Ensemble selon la revendication 15 ou la revendication 16, dans lequel :
la bande a une largeur et une épaisseur ;
la largeur est parallèle aux première et seconde surfaces inférieures et l'épaisseur est mesurée perpendiculairement aux première et seconde surfaces inférieures ; et
la largeur étant supérieure à l'épaisseur.
